# EUROPEAN PATENT SPECIFICATION

(11) **EP 3 660 941 B1**
(45) Date of publication and mention of the grant of the patent: **26.01.2022**
(21) Application number: 18839237.7
(22) Date of filing: 23.07.2018
(51) Int. Cl.: B32B 27/32, B32B 27/36, C09J 7/20, C09J 123/02, C09J 123/30, H01M 10/0525, H01M 50/105, H01M 50/193, H01M 50/197, H01M 50/198, H01M 50/178, H01M 50/183, H01M 50/172, C09J 151/06, C09J 7/30, B32B 7/12, B32B 27/08, B32B 27/20, B32B 27/28, B32B 27/30, B32B 27/38

(54) **ADHESIVE FILM FOR METAL TERMINALS, METAL TERMINAL WITH ADHESIVE FILM FOR METAL TERMINALS ATTACHED THERETO, BATTERY COMPRISING ADHESIVE FILM FOR METAL TERMINALS, AND METHOD FOR PRODUCING BATTERY**
KLEBEFOLIE FÜR METALLKLEMMEN, METALKLEMME MIT DARAN BEFESTIGTER KLEBEFOLIE FÜR METALLKLEMMEN, BATTERIE UMFASSEND EINE KLEBEFOLIE FÜR METALLKLEMMEN, UND METHODE ZUR HERSTELLUNG DER BATTERIE
FILM ADHÉSIF POUR BORNES MÉTALLIQUES, BORNE MÉTALLIQUE AVEC UN FILM ADHÉSIF POUR BORNES MÉTALLIQUES QUI Y SONT FIXÉES, BATTERIE COMPRENANT UN FILM ADHÉSIF POUR BORNES MÉTALLIQUES, ET PROCÉDÉ DE FABRICATION DE BATTERIE

(30) Priority: 24.07.2017 JP 2017142710
(43) Date of publication of application: 03.06.2020
(73) Proprietor: Dai Nippon Printing Co., Ltd., Tokyo 162-8001 (JP)
(72) Inventor: OJIRI, Tetsuya, Tokyo 162-8001 (JP); NAGAI, Atsushi, Tokyo 162-8001 (JP)
(74) Representative: Müller-Boré & Partner Patentanwälte PartG mbB
(86) International application number: PCT/JP2018/027468
(87) International publication number: WO 2019/021997

(56) References cited:
- JP-A- 2002 321 319
- JP-A- 2004 095 543
- JP-A- 2010 086 833
- JP-A- 2011 252 129
- JP-A- 2015 038 881
- JP-A- 2016 159 428
- JP-A- 2016 184 591
- JP-A- 2017 120 790
- JP-A- 2017 139 120

## Description

### Technical Field

The present invention relates to an adhesive film for metal terminals, a metal terminal with an adhesive film for metal terminals attached thereto, a battery comprising the adhesive film for metal terminals, and a method for producing a battery.

### Background Art

Various types of batteries have been heretofore developed, and in every battery, a packaging material is an essential member for sealing a battery element, including an electrode and an electrolyte. Metallic packaging materials have been heretofore widely used for battery packaging. In recent years, along with improvements in the performance of electric cars, hybrid electric cars, personal computers, cameras, mobile phones, and the like, batteries have been required to be diversified in shape, and to be thinner and lighter weight. However, the widely used metallic packaging materials are disadvantageous in that they have difficulty in keeping up with the diversification of shapes, and are limited in weight reduction.

Thus, a film-shaped laminate in which a base material layer/a barrier layer/a heat-sealable resin layer are laminated in this order has been recently proposed as a packaging material that can be readily processed into various shapes, and can achieve a thickness reduction and a weight reduction (see, for example, Patent Literature 1). When such a film-shaped packaging material is used, the battery element is sealed with the packaging material by heat-sealing a peripheral region of the packaging material in a state wherein the heat-sealable resin layer, positioned as an innermost layer of the packaging material, is opposed to itself. Metal terminals protrude from the heat-sealed region of the packaging material, and the battery element sealed with the packaging material is electrically connected to the outside via the metal terminals electrically connected to the electrodes of the battery element. That is, in the heat-sealed region of the packaging material, each of the metal terminals is formed to protrude outside the packaging material in a state wherein the metal terminal is held between surfaces of the heat-sealable resin layer. Because the metal terminal and the heat-sealable resin layer are formed of different types of materials, the hermeticity of the battery element is likely to decrease at the interface between the metal terminal and the heat-sealable resin layer. Thus, a technique for inhibiting a decrease in hermeticity at the interface between the metal terminal and the heat-sealable resin layer is known, in which an adhesive film is disposed at the interface between the metal terminal and the heat-sealable resin layer.

Patent Literature 2, for example, discloses an adhesive film for hermetically sealing a lithium battery metal terminal, wherein acid-modified polyolefin layers are formed on both surfaces of a biaxially stretched polyethylene naphthalate film, with an adhesion-enhancing agent layer containing an isocyanate component interposed therebetween.

### Citation List

### Patent Literature

Patent Literature 1: JP 2001-202927 A
Patent Literature 2: Japanese Patent No. 4,440,573

### Summary of Invention

### Technical Problem

In the adhesive film disclosed in Patent Literature 2, the biaxially stretched polyethylene naphthalate film, which has high water vapor barrier properties and high mechanical strength, functions as a base material, and the polyolefin layers are laminated on both surfaces of the base material, with the adhesion-enhancing agent layer interposed therebetween. Thus, the adhesive film is advantageous in that when the metal terminal and the heat-sealable resin layer of a packaging material are sealed with the adhesive film interposed therebetween, the adhesion between the metal terminal and the heat-sealable resin layer is increased, and additionally, a short circuit between the metal terminal and the barrier layer laminated on the packaging material can be prevented. The adhesive film is also advantageous in that it has high heat resistance because the biaxially stretched polyethylene naphthalate film is used.

In recent years, batteries have found a wide range of uses. For example, some batteries are used in a high-temperature environment, and depending on the type of electrolyte, the pressure inside the battery may increase. For example, when a battery is exposed to high temperature, the organic solvent used in the electrolytic solution may be decomposed to generate a gas, which may cause the pressure inside the battery to increase. Moreover, for example, charging with excessive voltage or discharging at excessive current may cause the temperature inside the battery to continuously increase to cause an uncontrollable battery reaction, which may cause the temperature inside the battery to increase.

As a result of research conducted by the inventors of the present invention, they found that when the pressure inside a battery increases, a force is applied in the thickness direction of an adhesive film for metal terminals positioned between a packaging material and a metal terminal, which may unseal a heat-sealed region on the periphery of the battery in the region where the adhesive film for metal terminals is positioned.

Under such circumstances, it is a main object of the present invention to provide an adhesive film for metal terminals that can impart high hermeticity between a packaging material and a metal terminal. It is also an object of the present invention to provide a metal terminal with an adhesive film for metal terminals attached thereto, a battery comprising the adhesive film for metal terminals, and a method for producing the battery.

### Solution to Problem

The present inventors conducted extensive research to solve the aforementioned problem. As a result, they found that an adhesive film for metal terminals, which is to be interposed between a metal terminal electrically connected to an electrode of a battery element and a packaging material for sealing the battery element, the adhesive film for metal terminals comprising a first polyolefin layer, a base material film containing polyethylene naphthalate, and a second polyolefin layer in this order, wherein the base material film is a stretched film, at least one of the first po lyolefin layer and the second polyolefin layer contains an acid-modified polyolefin, and when infrared absorption spectra are obtained for a surface of the base material film in a direction perpendicular to a thickness direction, in 18 directions from 0° (arbitrary reference direction perpendicular to the thickness direction) to 170° in increments of 10°, by means of polarization measurement by Fourier transform infrared spectroscopy using single-reflection ATR, a value obtained by calculating, in each of the 18 directions, a value Y by dividing an absorption peak intensity Y₇₆₅ at 765 cm⁻¹ by an absorption peak intensity Y₁₁₈₁ at 1181 cm⁻¹ in the infrared absorption spectrum, and then by dividing a maximum value Yₘₐₓ of the values Y by a minimum value Yₘᵢₙ of the values Y, is 1.0 or more and 1.3 or less, can impart high hermeticity between the packaging material and the metal terminal. The adhesive film for metal terminals has been revealed to be particularly effective for improving the hermeticity despite an increase in the internal pressure of a packaging material for batteries. The present invention was completed as a result of further research based on the findings.

In summary, the present invention provides embodiments of the invention as itemized below:
Item 1. An adhesive film for metal terminals, which is to be interposed between a metal terminal electrically connected to an electrode of a battery element and a packaging material for sealing the battery element,
   the adhesive film for metal terminals comprising a first polyolefin layer, a base material film containing polyethylene naphthalate, and a second polyolefin layer in this order, wherein
   the base material film is a stretched film,
   at least one of the first polyolefin layer and the second polyolefin layer contains an acid-modified polyolefin, and
   when infrared absorption spectra are obtained for a surface of the base material film in a direction perpendicular to a thickness direction, in 18 directions from 0 to 170° in increments of 10°, by means of polarization measurement by Fourier transform infrared spectroscopy using single-reflection ATR, a value obtained by calculating, in each of the 18 directions, a value Y by dividing an absorption peak intensity Y₇₆₅ at 765 cm⁻¹ by an absorption peak intensity Y₁₁₈₁ at 1181 cm⁻¹ in the infrared absorption spectrum, and then by dividing a maximum value Yₘₐₓ of the values Y by a minimum value Yₘᵢₙ of the values Y, is 1.0 or more and 1.3 or less.
Item 2. The adhesive film for metal terminals according to item 1, wherein the base material film has a thickness of 10 µm or more and 50 µm or less.
Item 3. The adhesive film for metal terminals according to item 1 or 2, wherein the first polyolefin layer and the second polyolefin layer contain an acid-modified polyolefin.
Item 4. The adhesive film for metal terminals according to any one of items 1 to 3, wherein each of the first polyolefin layer and the second polyolefin layer has a thickness of 5 µm or more and 80 µm or less.
Item 5. The adhesive film for metal terminals according to any one of items 1 to 4, wherein the adhesive film for metal terminals has a thickness of 20 µm or more and 200 µm or less.
Item 6. The adhesive film for metal terminals according to any one of items 1 to 5, wherein the packaging material is formed of a laminate comprising at least a base material layer, a barrier layer, and a heat-sealable resin layer in this order, and the adhesive film for metal terminals is interposed between the heat-sealable resin layer and the metal terminal.
Item 7. A metal terminal with an adhesive film for metal terminals attached thereto, comprising the adhesive film for metal terminals according to any one of items 1 to 6, wherein the adhesive film for metal terminals is attached to a metal terminal.
Item 8. A battery comprising the battery element comprising at least a positive electrode, a negative electrode, and an electrolyte, the packaging material for sealing the battery element, and the metal terminal electrically connected to each of the positive electrode and the negative electrode and protruding outside the packaging material, wherein
   the adhesive film for metal terminals according to any one of items 1 to 6 is interposed between the metal terminal and the packaging material.
Item 9. A method for producing a battery comprising the battery element comprising at least a positive electrode, a negative electrode, and an electrolyte, the packaging material for sealing the battery element, and the metal terminal electrically connected to each of the positive electrode and the negative electrode and protruding outside the packaging material,
   the method comprising the step of interposing the adhesive film for metal terminals according to any one of items 1 to 6 between the metal terminal and the packaging material, and sealing the battery element with the packaging material.

### Advantageous Effects of Invention

The present invention can provide an adhesive film for metal terminals that can impart high hermeticity between a packaging material and a metal terminal. The present invention can also provide a battery comprising the adhesive film for metal terminals and a method for producing the battery.

### Brief Description of Drawings

Fig. 1 is a schematic plan view of a battery according to the present invention.
Fig. 2 is a schematic cross-sectional view taken along line A-A' in Fig. 1.
Fig. 3 is a schematic cross-sectional view taken along line B-B' in Fig. 1.
Fig. 4 is a schematic cross-sectional view of an adhesive film for metal terminals according to the present invention.
Fig. 5 is a schematic cross-sectional view of a packaging material for use in the battery according to the present invention.
Fig. 6 is a schematic diagram for explaining a method of measuring the peeling strength between a metal terminal and the packaging material.

### Description of Embodiments

The adhesive film for metal terminals of the present invention is an adhesive film for metal terminals that is to be interposed between a metal terminal electrically connected to an electrode of a battery element and a packaging material for sealing the battery element. The adhesive film for metal terminals comprises a first polyolefin layer, a base material film containing polyethylene naphthalate, and a second polyolefin layer in this order, wherein the base material film is a stretched film, and at least one of the first polyolefin layer and the second polyolefin layer contains an acid-modified polyolefin. Furthermore, when infrared absorption spectra are obtained for a surface of the base material film in a direction perpendicular to a thickness direction, in 18 directions from 0° (arbitrary reference direction perpendicular to the thickness direction) to 170° in increments of 10°, by means of polarization measurement by Fourier transform infrared spectroscopy using single-reflection ATR, a value obtained by calculating, in each of the 18 directions, a value Y by dividing an absorption peak intensity Y₇₆₅ at 765 cm⁻¹ by an absorption peak intensity Y₁₁₈₁ at 1181 cm⁻¹ in the infrared absorption spectrum, and then by dividing a maximum value Yₘₐₓ of the values Y by a minimum value Yₘᵢₙ of the values Y, is 1.0 or more and 1.3 or less.

The battery of the present invention is a battery comprising a battery element comprising at least a positive electrode, a negative electrode, and an electrolyte, a packaging material for sealing the battery element, and a metal terminal electrically connected to each of the positive electrode and the negative electrode and protruding outside the packaging material, wherein the adhesive film for metal terminals of the present invention is interposed between the metal terminal and the packaging material. Hereinafter, the adhesive film for metal terminals of the present invention, the battery comprising the adhesive film for metal terminals, and a method for producing the battery will be described in detail.

In the present specification, any numerical range indicated by "... to ..." is intended to mean "... or more" and "... or less". For example, the recitation "2 to 15 mm" is intended to mean 2 mm or more and 15 mm or less.

### 1. Adhesive Film for Metal Terminals

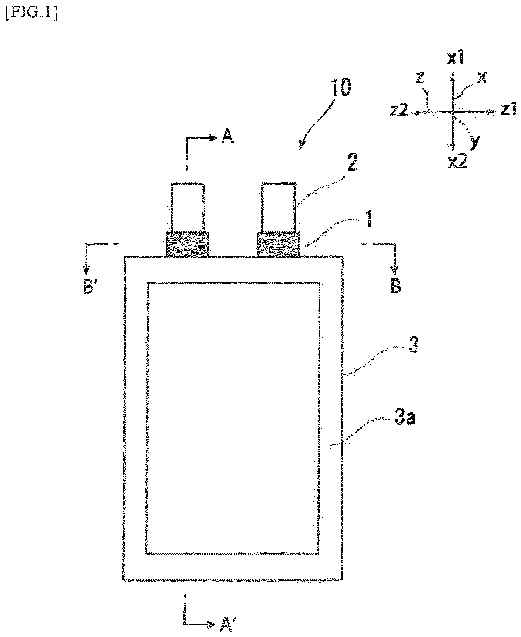

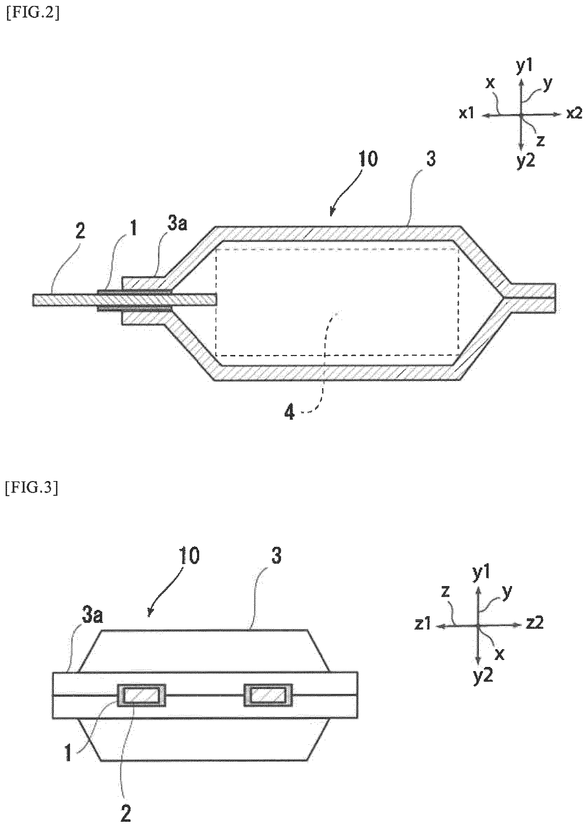

The adhesive film for metal terminals of the present invention is interposed between a metal terminal electrically connected to an electrode of a battery element and a packaging material for sealing the battery element. Specifically, as shown in Figs. 1 to 3, for example, an adhesive film 1 for metal terminals according to the present invention is interposed between a metal terminal 2, which is electrically connected to an electrode of a battery element 4, and a packaging material 3, which seals the battery element 4. The metal terminal 2 protrudes outside the packaging material 3, and is held between surfaces of the packaging material 3 with the adhesive film 1 for metal terminals interposed therebetween, in a peripheral region 3a of the packaging material 3 that has been heat-sealed. In the present invention, during heat-sealing of the packaging material, the heating temperature is typically about 160 to 190°C, and the pressure is typically about 1.0 to 2.0 MPa.

The adhesive film 1 for metal terminals of the present invention is provided to increase the adhesion between the metal terminal 2 and the packaging material 3. The hermeticity of the battery element 4 is improved by increasing the adhesion between the metal terminal 2 and the packaging material 3. As described above, at the time of heat-sealing of the battery element 4, the battery element is sealed in such a manner that the metal terminal 2 electrically connected to an electrode of the battery element 4 protrudes outside the packaging material 3. At this time, because the metal terminal 2 formed of metal and a heat-sealable resin layer 35 (layer formed of a heat-sealable resin, such as a polyolefin) positioned as an innermost layer of the packaging material 3 are formed of different types of materials, the hermeticity of the battery element is likely to decrease at the interface between the metal terminal 2 and the heat-sealable resin layer 35, if the adhesive film is not used.

The adhesive film 1 for metal terminals of the present invention includes a first polyolefin layer 12a, a base material film 11, and a second polyolefin layer 12b in this order, wherein at least one of the first polyolefin layer 12a and the second polyolefin layer 12b is formed of an acid-modified polyolefin. In the adhesive film 1 for metal terminals of the present invention, the first polyolefin layer 12a and the second polyolefin layer 12b are positioned on both surfaces. When the adhesive film 1 for metal terminals of the present invention is disposed between the packaging material 3 and the metal terminal 2 of the battery, the surface of the metal terminal 2 formed of metal and the heat-sealable resin layer 35 (layer formed of a heat-sealable resin, such as a polyolefin) of the packaging material 3 are bonded to each other, with the adhesive film 1 for metal terminals interposed therebetween.

### [Base Material Film 11]

In the adhesive film 1 for metal terminals, the base material film 11 is a layer that functions as a support of the adhesive film 1 for metal terminals. The base material film 11 is a stretched film.

The base material film 11 contains polyethylene naphthalate (PEN). Compared to polyethylene terephthalate (PET), a polyolefin, an acid-modified polyolefin, and the like, PEN has a higher melting point and a higher glass transition point, and is superior in mechanical strength at high temperature. Thus, a PEN film is unlikely to be thinned even when heat-sealed in a state wherein the adhesive film 1 for metal terminals is held between the metal terminal 2 and the packaging material 3. Moreover, compared to PET, PEN has lower water vapor permeability and superior water vapor barrier properties.

The base material film 11 may further contain other resins, as long as it contains polyethylene naphthalate (PEN). Examples of other resins include polyesters different from PEN, epoxy resins, acrylic resins, fluororesins, silicone resins, phenol resins, polyether imide resins, polyimide resins, polycarbonates, and mixtures or copolymers thereof.

Specific examples of polyester resins different from PEN include polyethylene terephthalate, polybutylene terephthalate, polybutylene naphthalate, polyethylene isophthalate, copolyesters containing ethylene terephthalate as a main repeating unit, and copolyesters containing butylene terephthalate as a main repeating unit. Specific examples of copolyesters containing ethylene terephthalate as a main repeating unit include copolyesters obtained by polymerizing ethylene isophthalate with ethylene terephthalate as a main repeating unit (abbreviated as polyethylene (terephthalate/isophthalate); hereinafter abbreviations are made in the same manner), polyethylene (terephthalate/isophthalate), polyethylene (terephthalate/adipate), polyethylene (terephthalate/sodium sulfoisophthalate), polyethylene (terephthalate/sodium isophthalate), polyethylene (terephthalate/phenyl-dicarboxylate), and polyethylene (terephthalate/decane dicarboxylate). Specific examples of copolyesters containing butylene terephthalate as a main repeating unit include copolyesters obtained by polymerizing butylene isophthalate with butylene terephthalate as a main repeating unit (abbreviated as polybutylene (terephthalate/isophthalate); hereinafter abbreviations are made in the same manner), polybutylene (terephthalate/adipate), polybutylene (terephthalate/sebacate), polybutylene (terephthalate/decane dicarboxylate), and polybutylene naphthalate. The polyesters different from PEN may be used alone or in combinations of two or more.

In the present invention, the base material film 11 is formed of a film containing polyethylene naphthalate (PEN), from the viewpoint of imparting high hermeticity between the packaging material and the metal terminal.

The base material film 11 is a stretched film, which is preferably uniaxially or biaxially stretched. The biaxially stretched base material film 11, which has improved heat resistance through oriented crystallization, is suitably used as the base material film 11.

Furthermore, in the adhesive film for metal terminals of the present invention, the value of a degree of surface orientation (Yₘₐₓ/Yₘᵢₙ) of the base material film as measured by the method described below is very small, i.e., 1.0 or more and 1.3 or less, such that particularly high hermeticity can be imparted between the packaging material and the metal terminal.

### <Measurement of Degree of Surface Orientation>

Infrared absorption spectra are obtained for a surface of the base material film in a direction perpendicular to a thickness direction, in 18 directions from 0° (arbitrary reference direction perpendicular to the thickness direction) to 170° in increments of 10°, by means of polarization measurement by Fourier transform infrared spectroscopy (FT-IR) using single-reflection ATR. The surface of the base material film herein refers to the surface on which either the first polyolefin layer or the second polyolefin layer is laminated. Subsequently, in each of the 18 directions, a value Y is calculated by dividing an absorption peak intensity Y₇₆₅ at 765 cm⁻¹ by an absorption peak intensity Y₁₁₈₁ at 1181 cm⁻¹ in the infrared absorption spectrum. Subsequently, a value (degree of surface orientation: Yₘₐₓ/Yₘᵢₙ) is calculated by dividing a maximum value Yₘₐₓ of the obtained values Y (18 values) by a minimum value Yₘᵢₙ of the obtained values Y. Specific conditions for measuring the infrared absorption spectra are, for example, as follows: When the degree of surface orientation of the surface of the base material film is to be measured for the adhesive film for metal terminals obtained from a battery, initially, the peripheral heat-sealed regions between which the metal terminal is interposed is cut, and the battery packaging material is removed to separate the adhesive film for metal terminals from the battery. Subsequently, the first polyolefin layer or the second polyolefin layer is peeled off to give a state wherein the base material film is exposed, and the infrared absorption spectra may be measured. Alternatively, when the degree of surface orientation of the surface of the base material film is to be measured for the adhesive film for metal terminals obtained from a metal terminal to which the adhesive film for metal terminals has been heat-sealed, the adhesive film for metal terminals is physically separated from the metal terminal, the first polyolefin layer or the second polyolefin layer is peeled off to give a state wherein the base material film is exposed, and the infrared absorption spectra may be measured. When the first polyolefin layer or the second polyolefin layer is to be peeled off from the base material film present in the adhesive film for metal terminals, the first polyolefin or the second polyolefin may be dissolved by using, for example, a solvent such as heated xylene to give a state wherein the base material film is exposed. The degree of surface orientation of the base material film is an index showing the oriented state of the base material film; therefore, the measurement value is the same between the case where the base material film is obtained and then the measurement is made and the case where the first polyolefin layer or the second polyolefin layer is peeled off from the adhesive film for metal terminals obtained from a battery to give a state wherein the base material film is exposed, and then the measurement is made. The base material film may be obtained for measuring the degree of surface orientation of the base material film.

(Conditions for Measuring Infrared Absorption Spectra)
Spectrometer: IS 10 manufactured by Thermo Scientific Inc.
Accessory: single-reflection ATR accessory (Seagull)
Detector: MCT (Hg Cd Te)
Resolution: 8 cm⁻¹
IRE: Ge
Incident angle: 30°
Polarizer: wire grid, S-polarization
Baseline: average of the intensities between 1800 cm⁻¹ and 2000 cm⁻¹
Absorption peak intensity Y₇₆₅: value obtained by subtracting the baseline value from the maximum value of the peak intensities in the range between 760 cm⁻¹ and 770 cm⁻¹
Absorption peak intensity Y₁₁₈₁: value obtained by subtracting the baseline value from the maximum value of the peak intensities in the range between 1176 cm⁻¹ and 1186 cm⁻¹

The mechanism whereby particularly high hermeticity can be imparted between the packaging material and the metal terminal because the value of the degree of surface orientation (Yₘₐₓ/Yₘᵢₙ) of the base material film is very small, i.e., 1.0 or more and 1.3 or less, in the adhesive film for metal terminals of the present invention, can be assumed to be as follows: As described above, when the pressure inside a packaging material for batteries increases, a force is applied in the thickness direction of the adhesive film for metal terminals positioned between the packaging material and the metal terminal, which may unseal the heat-sealed region on the periphery of the battery in the region where the adhesive film for metal terminals is positioned. As a result of further research on this issue, the present inventors found that when the base material film of the adhesive film for metal terminals contains polyethylene naphthalate, if a force is applied in the thickness direction of the adhesive film for metal terminals positioned between the packaging material and the metal terminal, the base material film of the adhesive film for metal terminals is likely to be delaminated, and a phenomenon occurs in which the battery is unsealed due to a breakage of the base material film of the adhesive film for metal terminals. The reason for this was assumed to be that because the base material film is stretched during manufacture, the naphthalene rings contained in the base material film are strongly oriented in one direction of the stretched direction (namely, the direction perpendicular to the thickness direction), which makes the base material film likely to be delaminated.

Subsequently, as a result of further research conducted by the present inventors, they ascertained that by using a base material film in which the value of the degree of surface orientation (Yₘₐₓ/Yₘᵢₙ) is very small, i.e., 1.0 or more and 1.3 or less, the orientation of the naphthalene rings contained in the base material film that is biased in one direction of the stretched direction is reduced, which effectively inhibits delamination of the base material film in the thickness direction. It is noted here that the absorption peak intensity Y₇₆₅ at 765 cm⁻¹ in the infrared absorption spectra originates from the out-of-plane vibrations of the CH groups, and the absorption peak intensity Y₁₁₈₁ at 1181 cm⁻¹ in the infrared absorption spectra originates from the vibrations of the naphthalene rings.

From the viewpoint of imparting particularly high hermeticity between the packaging material and the metal terminal, in the adhesive film for metal terminals of the present invention, the upper limit of the degree of surface orientation (Yₘₐₓ/Yₘᵢₙ) of the base material film 11 is preferably about 1.2 or less, more preferably about 1.1 or less, and the lower limit is 1.0 or more. Examples of preferred ranges of the degree of surface orientation (Yₘₐₓ/Yₘᵢₙ) include about 1.0 to 1.2 and about 1.0 to 1.1.

The degree of surface orientation (Yₘₐₓ/Yₘᵢₙ) of the base material film 11 can be adjusted by, for example, changing the biaxial stretch ratio of the base material film 11.

The surface of the base material film 11 may be optionally subjected to a known easy-adhesion means, such as corona discharge treatment, ozone treatment, or plasma treatment.

While the thickness of the base material film 11 is not particularly limited, it is preferably about 10 to 50 µm, and more preferably about 10 to 30 µm, from the viewpoint of preventing a short circuit, while imparting high hermeticity between the packaging material and the metal terminal.

### [First and Second Polyolefin Layers 12a and 12b]

In the adhesive film for metal terminals of the present invention, at least one of the first and second polyolefin layers 12a and 12b is formed of an acid-modified polyolefin. That is, the present invention includes the case where one of the first and second polyolefin layers 12a and 12b is formed of an acid-modified polyolefin, and the other is formed of a polyolefin; and the case where both the first and second polyolefin layers 12a and 12b are formed of an acid-modified polyolefin. The acid-modified polyolefin has high affinity for metals and heat-sealable resins, such as polyolefins. The polyolefin has high affinity for heat-sealable resins, such as polyolefins. In the adhesive film 1 for metal terminals of the present invention, therefore, the layer formed of the acid-modified polyolefin is disposed on the metal terminal 2 side, such that high adhesion can be achieved at the interface between the adhesive film 1 for metal terminals, and the metal terminal 2 and the heat-sealable resin layer 35.

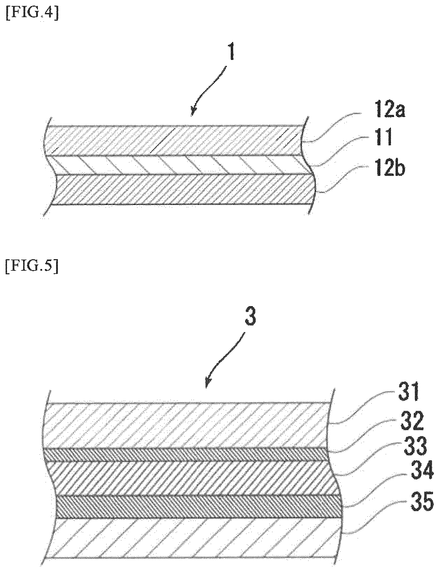

The adhesive film 1 for metal terminals may be a laminate including the first polyolefin layer 12a, the base material film 11, and the second polyolefin layer 12b in this order. For example, as shown in Fig. 4, the adhesive film 1 for metal terminals has a laminated structure in which the first polyolefin layer 12a/the base material film 11/the second polyolefin layer 12b are laminated in this order.

While the acid-modified polyolefin to be used in the first and second polyolefin layers 12a and 12b is not particularly limited as long as it is a polyolefin modified with an acid, it is preferably a polyolefin grafted with an unsaturated carboxylic acid or an anhydride thereof.

Specific examples of the polyolefin to be acid-modified include polyethylene, such as low-density polyethylene, medium-density polyethylene, high-density polyethylene, and linear low-density polyethylene; crystalline or amorphous polypropylene, such as homopolypropylene, block copolymers of polypropylene (for example, block copolymers of propylene and ethylene), and random copolymers of polypropylene (for example, random copolymers of propylene and ethylene); and terpolymers of ethylene-butene-propylene. Among these polyolefins, polyethylene and polypropylene are preferred.

The polyolefin to be acid-modified may also be a cyclic polyolefin. For example, a carboxylic acid-modified cyclic polyolefin is a polymer obtained by replacing a portion of the monomers that form the cyclic polyolefin with an α,β-unsaturated carboxylic acid or an anhydride thereof, and copolymerizing them, or by block-polymerizing or graft-polymerizing an α,β-unsaturated carboxylic acid or an anhydride thereof onto the cyclic polyolefin.

The cyclic polyolefin to be acid-modified is a copolymer of an olefin and a cyclic monomer. Examples of the olefin as a constituent monomer of the cyclic polyolefin include ethylene, propylene, 4-methyl-1-pentene, butadiene, and isoprene. Examples of the cyclic monomer as a constituent monomer of the cyclic polyolefin include cyclic alkenes, such as norbornene; specifically, cyclic dienes, such as cyclopentadiene, dicyclopentadiene, cyclohexadiene, and norbornadiene. Among these polyolefins, cyclic alkenes are preferred, and norbornene is more preferred. Examples of constituent monomers also include styrene.

Examples of the carboxylic acid or anhydride thereof to be used for the acid modification include maleic acid, acrylic acid, itaconic acid, crotonic acid, maleic anhydride, and itaconic anhydride.

When at least one of the first and second polyolefin layers 12a and 12b is formed of a polyolefin, examples of the polyolefin include the same ones as those mentioned above as the polyolefin to be acid-modified and the cyclic polyolefin to be acid-modified.

Each of the first and second polyolefin layers 12a and 12b may be formed using one resin component alone, or may be formed using a blend polymer made of a combination of two or more resin components. Furthermore, each of the first and second polyolefin layers 12a and 12b may be composed of only one layer, or may be composed of two or more layers formed of the same resin component or different resin components.

Each of the first and second polyolefin layers 12a and 12b may further optionally contain a filler. When the first and second polyolefin layers 12a and 12b contain a filler, the filler functions as a spacer, which can effectively inhibit a short circuit between the metal terminal 2 and a barrier layer 33 of the packaging material 3. The filler has a particle diameter of about 0.1 to 35 µm, preferably about 5.0 to 30 µm, and more preferably about 10 to 25 µm. The amount of the filler to be contained per 100 parts by mass of the resin component that forms each of the first and second polyolefin layers 12a and 12b is about 5 to 30 parts by mass, and preferably about 10 to 20 parts by mass.

Both inorganic and organic fillers may be used as the filler. Examples of inorganic fillers include carbon (carbon and graphite), silica, aluminum oxide, barium titanate, iron oxide, silicon carbide, zirconium oxide, zirconium silicate, magnesium oxide, titanium oxide, calcium aluminate, calcium hydroxide, aluminum hydroxide, magnesium hydroxide, and calcium carbonate. Examples of organic fillers include fluororesins, phenol resins, urea resins, epoxy resins, acrylic resins, benzoguanamine-formaldehyde condensate, melamine-formaldehyde condensate, crosslinked polymethyl methacrylate, and crosslinked polyethylene. From the viewpoint of shape stability, rigidity, and contents resistance, aluminum oxide, silica, fluororesins, acrylic resins, and benzoguanamine-formaldehyde condensate are preferred; in particular, spherical aluminum oxide and silica are more preferred. As a method of mixing the filler into the resin component that forms the polyolefin layers 12, the following methods may be adopted, for example: a method in which both components are melt-blended beforehand in a Banbury mixer or the like to form a masterbatch, which is then adjusted to a predetermined mixture ratio; and a method in which the filler is directly mixed into the resin component.

Each of the first and second polyolefin layers 12a and 12b may also optionally contain a pigment. Various inorganic pigments may be used as the pigment. Preferred specific examples of the pigment include carbon (carbon and graphite) mentioned above as the filler. Carbon (carbon and graphite), which is a material generally used inside a battery, is unlikely to dissolve into an electrolytic solution. Moreover, carbon (carbon and graphite) has a high coloring effect and thus can achieve a sufficient coloring effect when added only in an amount that does not impair adhesion, and also does not melt by heat and thus can increase the apparent melt viscosity of the added resin. Furthermore, carbon (carbon and graphite) can prevent, during thermal bonding (heat sealing), thinning of the region to which pressure is applied, thereby imparting high hermeticity between the packaging material and the metal terminal.

When a pigment is to be added to the first and second polyolefin layers 12a and 12b, in the case of using, for example, carbon black having a particle diameter of about 0.03 µm, the amount of the pigment to be added is about 0.05 to 0.3 part by mass, and preferably about 0.1 to 0.2 part by mass, per 100 parts by mass of the resin component that forms each of the first and second polyolefin layers 12a and 12b. By adding a pigment to the first and second polyolefin layers 12a and 12b, the presence or absence of the adhesive film 1 for metal terminals can be detected with a sensor, or can be visually inspected. When a filler and a pigment are to be added to the first and second polyolefin layers 12a and 12b, the filler and the pigment may be added to the identical first and second polyolefin layers 12a and 12b; however, from the viewpoint of avoiding impairment of the heat sealability of the adhesive film 1 for metal terminals, it is preferred to add the filler and the pigment to each of the first and second polyolefin layers 12a and 12b separately.

Each of the first and second polyolefin layers 12a and 12b may be formed of a resin film. When each of the first and second polyolefin layers 12a and 12b is formed of a resin film, the adhesive film for metal terminals can be suitably produced by laminating a resin film formed of the above-described polyolefin or acid-modified polyolefin onto the base material film 11 by using a dry lamination method, for example. Alternatively, the adhesive film for metal terminals can be suitably produced by extrusion-molding the resin that forms each of the first and second polyolefin layers 12a and 12b onto the base material film 11.

When the first and second polyolefin layers 12a and 12b each formed of a resin film are laminated to the surfaces of the base material film 11, the base material film 11-side surface of each of the first and second polyolefin layers 12a and 12b may be optionally subjected to a known easy-adhesion means, such as corona discharge treatment, ozone treatment, or plasma treatment. In particular, corona discharge treatment can increase the adhesion between the base material film 11, and the first polyolefin layer 12a and the second polyolefin layer 12b, thereby imparting high hermeticity between the packaging material and the metal terminal.

The thickness of each of the first and second polyolefin layers 12a and 12b can be appropriately selected according to the layer structure of the adhesive film 1 for metal terminals; in view of the filling of the resin after heat sealing, and pinholes, the lower limit is preferably about 5 µm or more, more preferably about 20 µm or more, and the upper limit is preferably about 80 µm or less, and more preferably about 50 µm or less. The range of the thickness of each of the first and second polyolefin layers 12a and 12b is preferably about 5 to 80 µm, about 5 to 50 µm, about 20 to 80 µm, or about 20 to 50 µm.

### [Adhesion-Enhancing Agent Layer]

An adhesion-enhancing agent layer (not illustrated) is a layer that is optionally provided for the purpose of strongly bonding the base material film 11 and the first and second polyolefin layers 12a and 12b. The adhesion-enhancing agent layer may be provided between the base material film 11 and only one of or both the first and second polyolefin layers 12a and 12b.

The adhesion-enhancing agent layer may be formed using a known adhesion-enhancing agent, such as an isocyanate-, polyethyleneimine-, polyester-, polyurethane-, or polybutadiene-based adhesion-enhancing agent. Among the above, the adhesion-enhancing agent layer is preferably formed using an isocyanate-based adhesion-enhancing agent, from the viewpoint of further improving the electrolytic solution resistance. An isocyanate-based adhesion-enhancing agent containing an isocyanate component selected from triisocyanate monomers and polymeric MDI has excellent lamination strength, and exhibits less reduction in lamination strength after immersion in an electrolytic solution. The adhesion-enhancing agent layer is particularly preferably formed using an adhesion-enhancing agent containing triphenylmethane-4,4',4"-triisocyanate, which is a triisocyanate monomer, or polymethylene polyphenyl polyisocyanate (NCO content: about 30%, viscosity: 200 to 700 mPa•s), which is polymeric MDI. Alternatively, the adhesion-enhancing agent layer is preferably formed using a two-liquid curable adhesion-enhancing agent containing, as a base agent, tris(p-isocyanatophenyl)thiophosphate, which is a triisocyanate monomer, or a polyethyleneimine-based adhesion-enhancing agent, and containing polycarbodiimide as a crosslinking agent.

The adhesion-enhancing agent layer may be formed by applying an adhesion-enhancing agent using a known coating method, such as a bar coating method, a roll coating method, or a gravure coating method, and drying. In the case of an adhesion-enhancing agent containing a triisocyanate, the amount of the adhesion-enhancing agent to be applied is about 20 to 100 mg/m², and preferably about 40 to 60 mg/m². In the case of an adhesion-enhancing agent containing polymeric MDI, the amount of the adhesion-enhancing agent to be applied is about 40 to 150 mg/m², and preferably about 60 to 100 mg/m². In the case of a two-liquid curable adhesion-enhancing agent containing a polyethyleneimine-based adhesion-enhancing agent as a base agent, and containing polycarbodiimide as a crosslinking agent, the amount of the adhesion-enhancing agent to be applied is about 5 to 50 mg/m², and preferably about 10 to 30 mg/m². The triisocyanate monomer is a monomer having three isocyanate groups in one molecule. Polymeric MDI is a mixture of MDI and MDI oligomers formed by polymerization of MDI, and is represented by the following formula:

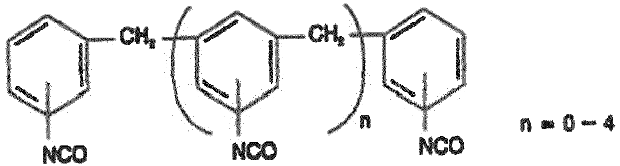

The adhesive film 1 for metal terminals of the present invention may be produced by laminating the first and second polyolefin layers 12a and 12b onto both surfaces of the base material film 11. Lamination between the base material film 11 and the first and second polyolefin layers 12a and 12b may be accomplished using a known method such as an extrusion lamination method or a thermal lamination method. When the base material film 11 and each of the first and second polyolefin layers 12a and 12 are to be laminated with the adhesion-enhancing agent layer interposed therebetween, for example, the adhesion-enhancing agent for forming the adhesion-enhancing agent layer may be applied onto the base material film 11 using the above-described method and dried, and then each of the first and second polyolefin layers 12a and 12b may be laminated on the adhesion-enhancing agent layer.

While the thickness (total thickness) of the adhesive film 1 for metal terminals is not particularly limited, the lower limit is preferably about 20 µm or more, more preferably about 50 µm or more, and the upper limit is preferably about 200 µm or less, and more preferably about 150 µm or less. The range of the thickness is preferably about 20 to 200 µm, about 20 to 150 µm, about 50 to 200 µm, or about 50 to 150 µm.

The method of interposing the adhesive film 1 for metal terminals between the metal terminal 2 and the packaging material 3 is not particularly limited; for example, as shown in Figs. 1 to 3, the adhesive film 1 for metal terminals may be wound around the metal terminal 2 in the region where the metal terminal 2 is held between surfaces of the packaging material 3. Alternatively, although this is not illustrated, the adhesive film 1 for metal terminals may be disposed on both surfaces of each of the metal terminals 2 as to as cross the two metal terminals 2, in the region where each metal terminal 2 is held between surfaces of the packaging material 3.

### [Metal Terminal 2]

The adhesive film 1 for metal terminals of the present invention is used by being interposed between the metal terminal 2 and the packaging material 3. The metal terminal 2 (tab) is a conductive member electrically connected to an electrode (the positive electrode or the negative electrode) of the battery element 4, and is formed of a metal material. Examples of the metal material that forms the metal terminal 2 include, but are not particularly limited to, aluminum, nickel, and copper. For example, the metal terminal 2 connected to the positive electrode of a lithium ion battery is typically formed of aluminum and the like. The metal terminal connected to the negative electrode of a lithium ion battery is typically formed of copper, nickel, and the like.

Preferably, the surface of the metal terminal 2 is subjected to a chemical conversion treatment, from the viewpoint of improving the electrolytic solution resistance. For example, when the metal terminal 2 is formed of aluminum, specific examples of the chemical conversion treatment include a known method in which an acid resistance film composed of a phosphate, a chromate, a fluoride, a triazine-thiol compound, or the like is formed. Preferred among methods of forming an acid resistance film is a phosphoric acid chromate treatment that uses a material composed of three components, i.e., a phenol resin, a chromium(III) fluoride compound, and phosphoric acid.

The dimensions of the metal terminal 2 may be appropriately adjusted depending on the dimensions of the battery to be used, for example. The thickness of the metal terminal 2 is preferably about 50 to 1000 µm, and more preferably about 70 to 800 µm. The length of the metal terminal 2 is preferably about 1 to 200 mm, and more preferably about 3 to 150 mm. The width of the metal terminal 2 is preferably about 1 to 200 mm, and more preferably about 3 to 150 mm.

### [Packaging Material 3]

The packaging material 3 is, for example, a packaging material having a laminated structure made of a laminate having at least a base material layer 31, the barrier layer 33, and the heat-sealable resin layer 35 in this order. Fig. 5 shows one example of the cross-sectional structure of the packaging material 3, in which the base material layer 31, an optionally provided adhesive agent layer 32, the barrier layer 33, an optionally provided adhesive layer 34, and the heat-sealable resin layer 35 are laminated in this order. In the packaging material 3, the base material layer 31 is an outermost layer, and the heat-sealable resin layer 35 is an innermost layer. During the assembly of a battery, surfaces of the heat-sealable resin layer 35 positioned on the periphery of the battery element 4 are contacted and heat-sealed with each other to hermetically seal the battery element 4, such that the battery element 4 is sealed.

While Figs. 1 to 3 illustrate a battery 10 that uses the embossed-type packaging material 3 molded by embossing molding, for example, the packaging material 3 may also be of a pouched type that is not molded. The pouched type includes a three-side seal type, a four-side seal type, and a pillow type, and any of these types may be used.

### (Base Material Layer 31)

In the packaging material 3, the base material layer 31 is a layer that functions as the base material of the packaging material, and forms an outermost layer side.

The material that forms the base material layer 31 is not particularly limited as long as it has insulation properties. Examples of the material that forms the base material layer 31 include polyesters, polyamides, epoxy, acrylic, fluororesins, polyurethanes, silicone resins, phenol, polyether imides, polyimides, and mixtures or copolymers thereof. A polyester, such as polyethylene terephthalate or polybutylene terephthalate, which has the advantage of having excellent electrolytic solution resistance, and being unlikely to cause whitening or the like due to attachment of the electrolytic solution, is suitably used as the material that forms the base material layer 31. Moreover, a polyamide film, which has excellent stretchability, and can prevent whitening due to a resin fracture in the base material layer 31 during molding, is suitably used as the material that forms the base material layer 31.

The base material layer 31 may be formed of a uniaxially or biaxially stretched resin film, or may be formed of an unstretched resin film. Among the above, a uniaxially or biaxially stretched resin film, particularly a biaxially stretched resin film, which has improved heat resistance through oriented crystallization, is suitably used as the base material layer 31.

Among the above, preferred as the resin film that forms the base material layer 31 are nylons and polyesters, and more preferred are biaxially stretched nylons and biaxially stretched polyesters.

The base material layer 31 can also be laminated with a resin film made of a different material, in order to improve the pinhole resistance, and the insulation properties when used as a packaging material for batteries. Specific examples include a multilayer structure in which a polyester film and a nylon film are laminated, and a multilayer structure in which a biaxially stretched polyester and a biaxially stretched nylon are laminated. When the base material layer 31 has a multilayer structure, the resin films may be bonded with an adhesive, or may be directly laminated without an adhesive. Examples of methods of bonding the resin films without an adhesive include methods in which the resin films are bonded in a heat-melted state, such as a co-extrusion method, a sandwich lamination method, and a thermal lamination method.

The base material layer 31 may be subjected to a friction-reducing treatment beforehand to improve moldability. When the base material layer 31 is subjected to a friction-reducing treatment, the coefficient of friction of the surface of the base material layer 31 is 1.0 or less, for example, although not particularly limited thereto. Examples of the friction-reducing treatment of the base material layer 31 include matting treatment, formation of a thin film layer of a slipping agent, and a combination thereof.

The thickness of the base material layer 31 is, for example, about 10 to 50 µm, and preferably about 15 to 30 µm.

### (Adhesive Agent Layer 32)

In the packaging material 3, the adhesive agent layer 32 is a layer that is optionally disposed on the base material layer 31 to impart adhesion to the base material layer 31. That is, the adhesive agent layer 32 is provided between the base material layer 31 and the barrier layer 33.

The adhesive agent layer 32 is formed of an adhesive capable of bonding the base material layer 31 and the barrier layer 33. The adhesive to be used for forming the adhesive agent layer 32 may be a two-liquid curable adhesive or a one-liquid curable adhesive. The adhesion mechanism of the adhesive used for forming the adhesive agent layer 32 is not particularly limited, and may be any of a chemical reaction type, a solvent volatilization type, a heat melting type, a heat pressing type, and the like.

Preferred examples of the resin component of the adhesive that can be used to form the adhesive agent layer 32 include a polyurethane-based two-liquid curable adhesive; and a polyamide, a polyester, or a blend resin of any of these resins and a modified polyolefin, from the viewpoint of having excellent extensibility, excellent durability and yellowing-inhibiting action under high-humidity conditions, excellent thermal degradation-inhibiting action during heat-sealing, and the like, and effectively inhibiting delamination by preventing a decrease in the lamination strength between the base material layer 31 and the barrier layer 33.

The adhesive agent layer 32 may be multilayered with different adhesive components. When the adhesive agent layer 32 is to be multilayered with different adhesive components, from the viewpoint of improving the lamination strength between the base material layer 31 and the barrier layer 33, it is preferred to select a resin having excellent adhesion to the base material layer 31 as the adhesive component to be disposed on the base material layer 31 side, and select an adhesive component having excellent adhesion to the barrier layer 33 as the adhesive component to be disposed on the barrier layer 33 side. When the adhesive agent layer 32 is to be multilayered with different adhesive components, specific examples of preferred adhesive components to be disposed on the barrier layer 33 side include acid-modified polyolefins, metalmodified polyolefins, mixed resins of polyesters and acid-modified polyolefins, and resins containing copolyesters.

The thickness of the adhesive agent layer 32 is, for example, about 2 to 50 µm, and preferably about 3 to 25 µm.

### (Barrier Layer 33)

In the packaging material, the barrier layer 33 is a layer that functions to improve the strength of the packaging material, and prevent the ingress of water vapor, oxygen, light, and the like into the battery. The barrier layer 33 is preferably a metal layer, that is, a layer formed of a metal. Specific examples of the metal that forms the barrier layer 33 include aluminum, stainless steel, and titanium, and aluminum is preferred. The barrier layer 33 may be formed of, for example, a metal foil or a vapor-deposited metal film, a vapor-deposited inorganic oxide film, a vapor-deposited carboncontaining inorganic oxide film, or a film provided with any of these vapor-deposited films. The barrier layer 33 is preferably formed of a metal foil, and more preferably formed of an aluminum foil. From the viewpoint of preventing the generation of creases and pinholes in the barrier layer 33 during the production of the packaging material, the barrier layer is preferably formed of a soft aluminum foil, for example, annealed aluminum (JIS H4160: 1994 A8021 H-O, JIS H4160: 1994 A8079 H-O, JIS H4000: 2014 A8021 P-O, and JIS H4000: 2014 A8079 P-O).

The thickness of the barrier layer 33 is preferably about 10 to 200 µm, and more preferably about 20 to 100 µm, from the viewpoint of making the generation of pinholes less likely during molding, while reducing the thickness of the packaging material.

Preferably, at least one surface, preferably both surfaces, of the barrier layer 33 is/are subjected to a chemical conversion treatment, in order to stabilize the adhesion, and prevent dissolution or corrosion, for example. As used herein, the chemical conversion treatment refers to a treatment for forming an acid resistance film on a surface of the barrier layer.

### [Adhesive Layer 34]

In the packaging material 3, the adhesive layer 34 is a layer that is optionally provided between the barrier layer 33 and the heat-sealable resin layer 35, in order to strongly bond the heat-sealable resin layer 35.

The adhesive layer 34 is formed of an adhesive capable of bonding the barrier layer 33 and the heat-sealable resin layer 35. While the composition of the adhesive used for forming the adhesive layer is not particularly limited, it is, for example, a resin composition containing an acid-modified polyolefin. Examples of the acid-modified polyolefin include the same ones as those mentioned as the first and second polyolefin layers 12a and 12b.

The thickness of the adhesive layer 34 is, for example, about 1 to 40 µm, and preferably about 2 to 30 µm.

### [Heat-Sealable Resin Layer 35]

In the packaging material 3, the heat-sealable resin layer 35 is a layer that corresponds to an innermost layer, and is heat-sealed with itself during the assembly of a battery to hermetically seal the battery element.

While the resin component to be used as the heat-sealable resin layer 35 is not particularly limited as long as it can be heat-sealed, examples include a polyolefin and a cyclic polyolefin.

Specific examples of the polyolefin include polyethylene, such as low-density polyethylene, medium-density polyethylene, high-density polyethylene, and linear low-density polyethylene; crystalline or amorphous polypropylene, such as homopolypropylene, block copolymers of polypropylene (for example, block copolymers of propylene and ethylene), and random copolymers of polypropylene (for example, random copolymers of propylene and ethylene); and terpolymers of ethylene-butene-propylene. Among these polyolefins, polyethylene and polypropylene are preferred.

The cyclic polyolefin is a copolymer of an olefin and a cyclic monomer. Examples of the olefin as a constituent monomer of the cyclic polyolefin include ethylene, propylene, 4-methyl-1-pentene, butadiene, and isoprene. Examples of the cyclic monomer as a constituent monomer of the cyclic polyolefin include cyclic alkenes, such as norbornene; specifically, cyclic dienes, such as cyclopentadiene, dicyclopentadiene, cyclohexadiene, and norbornadiene. Among these polyolefins, cyclic alkenes are preferred, and norbornene is more preferred. Examples of constituent monomers also include styrene.

Among these resin components, a crystalline or amorphous polyolefin, a cyclic polyolefin, and a blend polymer thereof are preferred; and polyethylene, polypropylene, a copolymer of ethylene and norbornene, and a blend polymer of two or more of the above are more preferred.

The heat-sealable resin layer 35 may be formed using one resin component alone, or may be formed using a blend polymer made of a combination of two or more resin components. Furthermore, the heat-sealable resin layer 35 may be composed of only one layer, or may be composed of two or more layers formed of the same resin component or different resin components.

While the thickness of the heat-sealable resin layer 35 is not particularly limited, it is about 2 to 2000 µm, preferably about 5 to 1000 µm, and more preferably about 10 to 500 µm.

### 2. Battery 10

The battery 10 of the present invention comprises the battery element 4 comprising at least a positive electrode, a negative electrode, and an electrolyte, the packaging material 3 for sealing the battery element 4, and the metal terminal 2 electrically connected to each of the positive electrode and the negative electrode and protruding outside the packaging material 3. In the battery 10 of the present invention, the adhesive film 1 for metal terminals of the present invention is interposed between the metal terminal 2 and the packaging material 3. That is, the battery 10 of the present invention may be produced by a method comprising the step of interposing the adhesive film 1 for metal terminals of the present invention between the metal terminal 2 and the packaging material 3.

Specifically, the battery element including at least a positive electrode, a negative electrode, and an electrolyte is covered with the packaging material 3 such that in a state wherein the metal terminal 2 connected to each of the positive electrode and the negative electrode protrudes outside, the adhesive film 1 for metal terminals of the present invention is interposed between the metal terminal 2 and the heat-sealable resin layer 35, and a flange of the packaging material (region where the heat-sealable resin layer 35 is brought into contact with itself, i.e., the peripheral region 3a of the packaging material) can be formed on the periphery of the battery element 4, and then the heat-sealable resin layer 35 in the flange is heat-sealed with itself to hermetically seal the battery element. As a result, the battery 10 that uses the packaging material 3 is provided. When the packaging material 3 is used to house the battery element 4, it is used such that the heat-sealable resin layer 35 of the packaging material 3 is positioned on the inner side (surface that contacts the battery element 4) thereof.

While the battery of the present invention may be either a primary battery or a secondary battery, it is preferably a secondary battery. While the type of the secondary battery is not particularly limited, examples include lithium ion batteries, lithium ion polymer batteries, lead storage batteries, nickel-hydrogen storage batteries, nickel-cadmium storage batteries, nickel-iron storage batteries, nickel-zinc storage batteries, silver oxide-zinc storage batteries, metal-air batteries, polyvalent cation batteries, condensers, and capacitors. Preferred among these secondary batteries are lithium ion batteries and lithium ion polymer batteries.

### Examples

The present invention will be hereinafter described in detail with reference to examples and comparative examples; however, the present invention is not limited to the examples.

### <Measurement of Degree of Surface Orientation>

The degree of surface orientation of each of the base material films (PEN films) used in the following examples and comparative examples was measured using the following method:
Initially, infrared absorption spectra were obtained for a surface of the base material film in a direction perpendicular to the thickness direction, in 18 directions from 0 to 170° in increments of 10°, by means of polarization measurement by Fourier transform infrared spectroscopy (FT-IR) using single-reflection ATR. The surface of the base material film herein refers to the surface on which an acid-modified polyolefin layer was laminated. Subsequently, in each of the 18 directions, a value Y was calculated by dividing an absorption peak intensity Y₇₆₅ at 765 cm⁻¹ by an absorption peak intensity Y₁₁₈₁ at 1181 cm⁻¹ in the infrared absorption spectrum. Subsequently, a value (degree of surface orientation: Yₘₐₓ/Yₘᵢₙ) was calculated by dividing a maximum value Yₘₐₓ of the obtained values Y (18 values) by a minimum value Yₘᵢₙ of the obtained values Y. The results are shown in Table 2. Specific conditions for measuring the infrared absorption spectra were as follows:

(Conditions for Measuring Infrared Absorption Spectra)
Spectrometer: IS 10 manufactured by Thermo Scientific Inc.
Accessory: single-reflection ATR accessory (Seagull)
Detector: MCT (Hg Cd Te)
Resolution: 8 cm⁻¹
IRE: Ge
Incident angle: 30°
Polarizer: wire grid, S-polarization
Baseline: average of the intensities between 1800 cm⁻¹ and 2000 cm⁻¹
Absorption peak intensity Y₇₆₅: value obtained by subtracting the baseline value from the maximum value of the peak intensities in the range between 760 cm⁻¹ and 770 cm⁻¹
Absorption peak intensity Y₁₁₈₁: value obtained by subtracting the baseline value from the maximum value of the peak intensities in the range between 1176 cm⁻¹ and 1186 cm⁻¹

### Examples 1 to 3. and Comparative Examples 1 and 2

### <Production of Adhesive Films for Metal Terminals>

PEN (polyethylene naphthalate) films (thickness: 12 µm) each having a degree of surface orientation (Yₘₐₓ/Yₘᵢₙ) as shown in Table 2 were used as base material films. Table 1 shows values Y (value calculated, in each of the 18 directions, by dividing the absorption peak intensity Y₇₆₅ at 765 cm⁻¹ by the absorption peak intensity Y₁₁₈₁ at 1181 cm⁻¹ in the infrared absorption spectrum) obtained by measuring the IR absorption spectra of the surfaces of the base material films in the 18 directions from 0 to 170° in increments of 10°. Maleic acid-modified polypropylene (hereinafter referred to as PPa) was extruded by a T-die extruder and applied (thickness: 45 µm) to one surface of each base material film. Subsequently, PPa was extruded by the T-die extruder and applied (thickness: 45 µm) to the other surface of the base material film. The resulting material was then subjected to an aging treatment to obtain an adhesive film for metal terminals on which the acid-modified polyolefin layer/the base material film (PEN)/the acid-modified polyolefin layer were laminated. Both surfaces of the base material film had been subjected to corona discharge treatment. The degree of surface orientation of the base material film was adjusted by, for example, changing the biaxial stretch ratio of the base material film.

### <Measurement of Peeling Strength between Metal Terminal and Packaging Material>

Initially, a packaging material was produced in accordance with the following procedures: An aluminum alloy foil (thickness: 35 µm) was laminated onto a base material layer (thickness: 25 µm) made of a nylon film, using a dry lamination method. Specifically, a two-liquid urethane adhesive (a polyol compound and an aromatic isocyanate-based compound) was applied to one surface of a barrier layer made of an aluminum alloy foil to form an adhesive agent layer (thickness: 3 µm) on the aluminum alloy foil. Subsequently, the adhesive agent layer on the aluminum alloy foil and the base material layer were laminated to each other, and then subjected to an aging treatment to prepare a laminate having the base material layer/the adhesive agent layer/the barrier layer. Subsequently, an adhesive layer made of a maleic anhydridemodified polypropylene resin (thickness: 20 µm; disposed on the metal layer side) and a heat-sealable resin layer made of a random polypropylene resin (thickness: 15 µm; innermost layer) were co-extruded onto the barrier layer of the laminate, such that the adhesive layer/the heat-sealable resin layer were laminated onto the barrier layer. Subsequently, the resulting laminate was heated at 190°C for 2 minutes to obtain a packaging material in which the base material layer, the adhesive agent layer, the barrier layer, the adhesive layer, and the heat-sealable resin layer were laminated in this order.

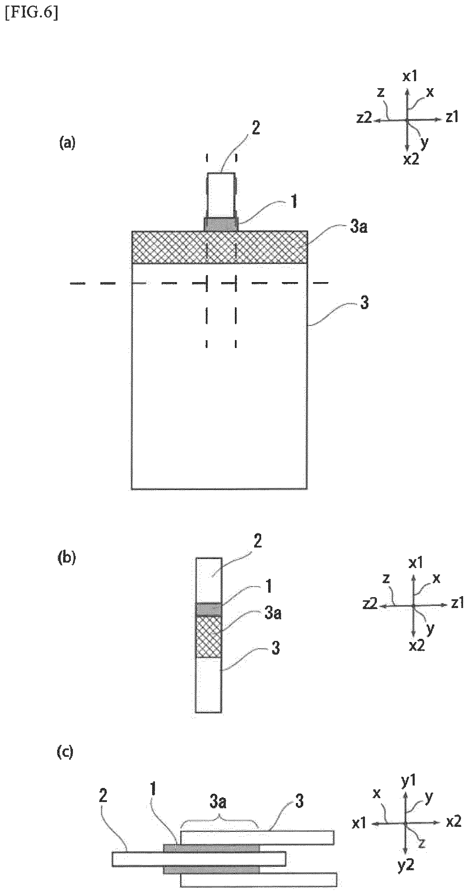

Subsequently, using the obtained packaging material 3 and each of the adhesive films 1 for metal terminals obtained above, the peeling strength between the metal terminal 2 and the packaging material 3 was measured. Specifically, the packaging material 3 obtained above was cut into a size of 120 mm (MD: Machine Direction; longitudinal direction) × 60 mm (TD: Transverse Direction; lateral direction). The adhesive film 1 for metal terminals obtained above was cut into a size of 15 mm (MD; longitudinal direction) × 7 mm (TD; lateral direction). Subsequently, the cut packaging material 3 was folded in half in the longitudinal direction (MD) such that the heat-sealable resin layer side faced the inner side. Subsequently, an aluminum foil (JIS H4160: 1994 A8079H-O) having a thickness of 0.1 mm, a width of 5 mm, and a length of 30 mm was inserted (inserted over a length of 15 mm) as the metal terminal 2 (dummy metal terminal) between mutually opposing surfaces of the heat-sealable resin layer, and the adhesive film 1 for metal terminals having a width of 7 mm and a length of 15 mm was disposed between the metal terminal 2 and each of the upper and lower surfaces of the metal terminal 2, such that the longitudinal direction of the metal terminal 2 became orthogonal to the longitudinal direction of the adhesive film 1 for metal terminals. In this state, the metal terminal 2 was heat-sealed with the peripheral region 3a of the packaging material 3 under the conditions of 190°C, a surface pressure of 1.0 MPa, and a 7-mm-width head (in Figs. 6(a) and (b), the heat-sealed peripheral region 3a corresponds to the shaded region). Subsequently, as shown in the dashed parts in Fig. 6(a), the region where the packaging material 3, the adhesive film 1 for metal terminals, and the metal terminal 2 were laminated was cut along the shape of the metal terminal 2 from above the packaging material 3 to obtain a sample as shown in Figs. 6(b) and (c). Subsequently, the end of the metal terminal 2 and the end of the packaging material 3 were chucked (distance between the chucks: 50 mm) and pulled in a 180° direction at a speed of 50 mm/minute, using a tensile testing machine (trade name AGS-50D manufactured by Shimadzu Corporation), and the peeling strength between the metal terminal and the packaging material was measured, and the presence or absence of a peeled interface was checked. Tensile tests were also performed on 20 samples for each standard, using the same method as described above, and the presence or absence of a peeled interface was checked. The results are shown in Table 2.
Each of the peeling strengths represents the average of the peeling strengths of the 20 samples.

**[Table 1]**

| | **Degree of Surface Orientation Ymax/Ymin of Base Material Film** | **Peeling Strength (N/5 mm)** | **Number of Samples of PEN Failure** |
|---|---|---|---|
| **Example1** | **1.1** | **3.1** | **0** |
| **Example2** | **1.2** | **3.1** | **0** |
| **Example3** | **1.3** | **3.0** | **0** |
| **Comparative Example1** | **1.5** | **1.4** | **19** |
| **Comparative Example2** | **2.0** | **1.3** | **20** |

**[Table 2]**

| | Y | | | | | | | | | |
|---|---|---|---|---|---|---|---|---|---|---|
| Angle (°) | 0 | 10 | 20 | 30 | 40 | 50 | 60 | 70 | 80 | 90 |
| Example1 | 0.484606 | 0.480887 | 0.477109 | 0.474342 | 0.471576 | 0.465633 | 0.461717 | 0.460451 | 0.458155 | 0.456429 |
| Example2 | 0.486932 | 0.499517 | 0.511903 | 0.505457 | 0.499012 | 0.499625 | 0.487324 | 0.475373 | 0.473003 | 0.460579 |
| Exemple3 | 0.457421 | 0.474718 | 0.492005 | 0.506665 | 0.521325 | 0.518860 | 0.515867 | 0.489715 | 0.487274 | 0.460633 |
| Comparative Example1 | 0.446126 | 0.465802 | 0.485475 | 0.502614 | 0.519755 | 0.534225 | 0.554229 | 0.532695 | 0.530039 | 0.507974 |
| Comparative Example2 | 0.457330 | 0.475346 | 0.493162 | 0.513692 | 0.534220 | 0.546821 | 0.597860 | 0.562163 | 0.559361 | 0.523104 |

| | Y | | | | | | | | Ymax/Ymin | |
|---|---|---|---|---|---|---|---|---|---|---|
| Angle (°) | 100 | 110 | 120 | 130 | 140 | 150 | 160 | 170 | | |
| Example1 | 0.460079 | 0.463309 | 0.466496 | 0.470907 | 0.475998 | 0.481851 | 0.481084 | 0.480317 | 1.1 | |
| Example2 | 0.452967 | 0.449809 | 0.441746 | 0.454292 | 0.458374 | 0.464002 | 0.473678 | 0.483354 | 1.2 | |
| Example3 | 0.442808 | 0.439721 | 0.421455 | 0.410709 | 0.415295 | 0.420464 | 0.426193 | 0.431922 | 1.3 | |
| Comparative Example1 | 0.457322 | 0.454134 | 0.403026 | 0.398484 | 0.399612 | 0.377526 | 0.385667 | 0.393809 | 1.5 | |
| Comparative Example2 | 0.497928 | 0.494457 | 0.468785 | 0.377071 | 0.354230 | 0.310464 | 0.371193 | 0.431922 | 2.0 | |

In Table 1, "Number of Samples of PEN Failure" denotes the number of samples in which when the dummy metal terminal and the adhesive film for metal terminals were peeled from each other, the region of PEN (base material film) of the adhesive film for metal terminals became a peeled interface (PEN was observed at the peeled interface), and cohesive failure occurred in the region of PEN of the adhesive film for metal terminals.

As is clear from the results shown in Table 2, when the adhesive films for metal terminals of Examples 1 to 3, in which the degree of surface orientation (Yₘₐₓ/Yₘᵢₙ) of the base material film was 1.0 or more and 1.3 or less, were used, the peeling strength between the dummy metal terminal and the barrier layer was high, and the "Number of Samples of PEN Failure" was zero.

### Reference Signs List

- 1:: adhesive film for metal terminals
- 2:: metal terminal
- 3:: packaging material
- 3a:: peripheral region of packaging material
- 4:: battery element
- 10:: battery
- 11:: base material film
- 12a:: first polyolefin layer
- 12b:: second polyolefin layer
- 31:: base material layer
- 32:: adhesive agent layer
- 33:: barrier layer
- 34:: adhesive layer
- 35:: heat-sealable resin layer

## Claims

1. An adhesive film for metal terminals, interdisposable between a metal terminal electrically connected to an electrode of a battery element and a packaging material for sealing the battery element,
the adhesive film for metal terminals comprising a first polyolefin layer, a base material film containing polyethylene naphthalate, and a second polyolefin layer in this order, wherein
the base material film is a stretched film,
at least one of the first polyolefin layer and the second polyolefin layer contains an acid-modified polyolefin, and
when infrared absorption spectra are obtained for a surface of the base material film in a direction perpendicular to a thickness direction, in 18 directions from 0 to 170° in increments of 10°, by means of polarization measurement by Fourier transform infrared spectroscopy using single-reflection ATR, a value obtained by calculating, in each of the 18 directions, a value Y by dividing an absorption peak intensity Y₇₆₅ at 765 cm⁻¹ by an absorption peak intensity Y₁₁₈₁ at 1181 cm⁻¹ in the infrared absorption spectrum, and then by dividing a maximum value Yₘₐₓ of the values Y by a minimum value Yₘᵢₙ of the values Y, is 1.0 or more and 1.3 or less.

2. The adhesive film for metal terminals according to claim 1, wherein the base material film has a thickness of 10 µm or more and 50 µm or less.

3. The adhesive film for metal terminals according to claim 1 or 2, wherein the first polyolefin layer and the second polyolefin layer contain an acid-modified polyolefin.

4. The adhesive film for metal terminals according to any one of claims 1 to 3, wherein each of the first polyolefin layer and the second polyolefin layer has a thickness of 5 µm or more and 80 µm or less.

5. The adhesive film for metal terminals according to any one of claims 1 to 4, wherein the adhesive film for metal terminals has a thickness of 20 µm or more and 200 µm or less.

6. The adhesive film for metal terminals according to any one of claims 1 to 5, wherein the packaging material is formed of a laminate comprising at least a base material layer, a barrier layer, and a heat-sealable resin layer in this order, and the adhesive film for metal terminals is interdisposable between the heat-sealable resin layer and the metal terminal.

7. A metal terminal with an adhesive film for metal terminals attached thereto, comprising the adhesive film for metal terminals according to any one of claims 1 to 6, wherein the adhesive film for metal terminals is attached to a metal terminal.

8. A battery comprising the battery element comprising at least a positive electrode, a negative electrode, and an electrolyte, the packaging material for sealing the battery element, and the metal terminal electrically connected to each of the positive electrode and the negative electrode and protruding outside the packaging material, wherein
the adhesive film for metal terminals according to any one of claims 1 to 6 is interposed between the metal terminal and the packaging material.

9. A method for producing a battery comprising the battery element comprising at least a positive electrode, a negative electrode, and an electrolyte, the packaging material for sealing the battery element, and the metal terminal electrically connected to each of the positive electrode and the negative electrode and protruding outside the packaging material,
the method comprising the step of interposing the adhesive film for metal terminals according to any one of claims 1 to 6 between the metal terminal and the packaging material, and sealing the battery element with the packaging material.

## Patentansprüche

1. Haftmittelfolie für Metallanschlüsse, die zwischen einem Metallanschluss, der elektrisch mit einer Elektrode eines Batterieelements verbunden ist, und einem Verpackungsmaterial zum Versiegeln des Batterieelements einfügt werden kann, wobei die Haftmittelfolie für Metallanschlüsse eine erste Polyolefinschicht, eine Grundmaterialfolie, enthaltend Polyethylennaphthalat, und eine zweite Polyolefinschicht in dieser Reihenfolge umfasst, wobei
die Grundmaterialfolie eine gestreckte Folie ist,
mindestens eine der ersten Polyolefinschicht und der zweiten Polyolefinschicht ein säuremodifiziertes Polyolefin enthält, und
wobei, wenn Infrarot-Absorptionsspektren für eine Oberfläche der Grundmaterialfolie in einer Richtung senkrecht zu einer Dickenrichtung, in 18 Richtungen von 0 bis 170° in Schritten von 10°, mittels Polarisationsmessung durch Fourier-Transformations-Infrarotspektroskopie unter Verwendung von Einfachreflexions-ATR erhalten werden, ein Wert 1,0 oder mehr und 1,3 oder weniger beträgt, der durch Berechnen eines Wertes Y in jeder der 18 Richtungen durch Dividieren einer Intensität Y₇₆₅ der Absorptions-Peaks bei 765 cm⁻¹ durch eine Intensität Y₁₁₈₁ der Absorptions-Peaks bei 1181 cm⁻¹ im Infrarot-Absorptionsspektrum und anschließendem Dividieren eines Maximalwertes Yₘₐₓ der Werte Y durch einen Minimalwert Yₘᵢₙ der Werte Y erhalten wird.

2. Haftmittelfolie für Metallanschlüsse nach Anspruch 1, wobei die Grundmaterialfolie eine Dicke von 10 µm oder mehr und 50 µm oder weniger aufweist.

3. Haftmittelfolie für Metallanschlüsse nach Anspruch 1 oder 2, wobei die erste Polyolefinschicht und die zweite Polyolefinschicht ein säuremodifiziertes Polyolefin enthalten.

4. Haftmittelfolie für Metallanschlüsse nach einem der Ansprüche 1 bis 3, wobei die erste Polyolefinschicht und die zweite Polyolefinschicht jeweils eine Dicke von 5 µm oder mehr und 80 µm oder weniger aufweisen.

5. Haftmittelfolie für Metallanschlüsse nach einem der Ansprüche 1 bis 4, wobei die Haftmittelfolie für Metallanschlüsse eine Dicke von 20 µm oder mehr und 200 µm oder weniger aufweist.

6. Haftmittelfolie für Metallanschlüsse nach einem der Ansprüche 1 bis 5, wobei das Verpackungsmaterial aus einem Laminat, umfassend mindestens eine Grundmaterialschicht, eine Sperrschicht und eine heißsiegelfähige Harzschicht in dieser Reihenfolge, gebildet ist, und wobei die Haftmittelfolie für Metallanschlüsse zwischen der heißsiegelfähigen Harzschicht und dem Metallanschluss eingefügt werden kann.

7. Metallanschluss mit einer daran gebundenen Haftmittelfolie für Metallanschlüsse, umfassend die Haftmittelfolie für Metallanschlüsse nach einem der Ansprüche 1 bis 6, wobei die Haftmittelfolie für Metallanschlüsse an einen Metallanschluss gebunden ist.

8. Batterie, umfassend das Batterieelement, umfassend mindestens eine positive Elektrode, eine negative Elektrode und einen Elektrolyten, das Verpackungsmaterial zum Versiegeln des Batterieelements und den Metallanschluss, der elektrisch mit jeder der positiven Elektrode und der negativen Elektrode verbunden ist und aus dem Verpackungsmaterial herausragt, wobei die Haftmittelfolie für Metallanschlüsse nach einem der Ansprüche 1 bis 6 zwischen dem Metallanschluss und dem Verpackungsmaterial eingefügt ist.

9. Verfahren zur Herstellung einer Batterie, umfassend das Batterieelement, umfassend mindestens eine positive Elektrode, eine negative Elektrode und einen Elektrolyten, das Verpackungsmaterial zum Versiegeln des Batterieelements und den Metallanschluss, der elektrisch mit jeder der positiven Elektrode und der negativen Elektrode verbunden ist und aus dem Verpackungsmaterial herausragt, wobei
das Verfahren den Schritt des Einfügens der Haftmittelfolie für Metallanschlüsse nach einem der Ansprüche 1 bis 6 zwischen dem Metallanschluss und dem Verpackungsmaterial und das Versiegeln des Batterieelements mit dem Verpackungsmaterial umfasst.

## Revendications

1. Film adhésif pour bornes métalliques, pouvant être intercalé entre une borne métallique connectée électriquement à une électrode d'un élément de batterie et un matériau d'emballage pour sceller l'élément de batterie,
le film adhésif pour bornes métalliques comprenant une première couche de polyoléfine, un film de matériau de base contenant du polyéthylène naphtalate et une seconde couche de polyoléfine dans cet ordre, dans lequel le film de matériau de base est un film étiré,
au moins une de la première couche de polyoléfine et de la seconde couche de polyoléfine contient une polyoléfine modifiée par un acide, et
lorsque des spectres d'absorption infrarouge sont obtenus pour une surface du film de matériau de base dans une direction perpendiculaire à une direction d'épaisseur, dans 18 directions de 0 à 170° en incréments de 10°, au moyen d'une mesure de polarisation par spectroscopie infrarouge à transformée de Fourier utilisant une réflectance totale atténuée à réflexion unique, une valeur obtenue en calculant, dans chacune des 18 directions, une valeur Y en divisant une intensité de crête d'absorption Y₇₆₅ à 765 cm⁻¹ par une intensité de crête d'absorption Y₁₁₈₁ à 1181 cm⁻¹ dans le spectre d'absorption infrarouge, puis en divisant une valeur maximale Yₘₐₓ des valeurs Y par une valeur minimale Yₘᵢₙ des valeurs Y, est 1,0 ou plus et 1,3 ou moins.

2. Film adhésif pour bornes métalliques selon la revendication 1, dans lequel le film de matériau de base a une épaisseur de 10 µm ou plus et 50 µm ou moins.

3. Film adhésif pour bornes métalliques selon la revendication 1 ou 2, dans lequel la première couche de polyoléfine et la seconde couche de polyoléfine contiennent une polyoléfine modifiée par un acide.

4. Film adhésif pour bornes métalliques selon l'une quelconque des revendications 1 à 3, dans lequel chacune de la première couche de polyoléfine et de la seconde couche de polyoléfine a une épaisseur de 5 µm ou plus et 80 µm ou moins.

5. Film adhésif pour bornes métalliques selon l'une quelconque des revendications 1 à 4, dans lequel le film adhésif pour bornes métalliques a une épaisseur de 20 µm ou plus et 200 µm ou moins.

6. Film adhésif pour bornes métalliques selon l'une quelconque des revendications 1 à 5, dans lequel le matériau d'emballage est formé d'un stratifié comprenant au moins une couche de matériau de base, une couche barrière et une couche de résine thermoscellable dans cet ordre, et le film adhésif pour bornes métalliques peut être intercalé entre la couche de résine thermoscellable et la borne métallique.

7. Borne métallique avec un film adhésif pour bornes métalliques relié à elle, comprenant le film adhésif pour bornes métalliques selon l'une quelconque des revendications 1 à 6, dans laquelle le film adhésif pour bornes métalliques est relié à une borne métallique.

8. Batterie comprenant l'élément de batterie comprenant au moins une électrode positive, une électrode négative et un électrolyte, le matériau d'emballage pour sceller l'élément de batterie, et la borne métallique connectée électriquement à chacune de l'électrode positive et de l'électrode négative, et faisant saillie à l'extérieur du matériau d'emballage, dans laquelle le film adhésif pour bornes métalliques selon l'une quelconque des revendications 1 à 6 est interposé entre la borne métallique et le matériau d'emballage.

9. Procédé de production d'une batterie comprenant l'élément de batterie comprenant au moins une électrode positive, une électrode négative et un électrolyte, le matériau d'emballage pour sceller l'élément de batterie, et la borne métallique connectée électriquement à chacune de l'électrode positive et de l'électrode négative, et faisant saillie à l'extérieur du matériau d'emballage, le procédé comprenant l'étape consistant à interposer le film adhésif pour bornes métalliques selon l'une quelconque des revendications 1 à 6 entre la borne métallique et le matériau d'emballage, et sceller l'élément de batterie avec le matériau d'emballage.
